# EUROPEAN PATENT SPECIFICATION

(11) **EP 0 429 312 B1**
(45) Date of publication and mention of the grant of the patent: **21.08.1996**
(21) Application number: 90312754.6
(22) Date of filing: 23.11.1990
(51) Int. Cl.: B29C 70/50

(54) **Unidirectional thin glass prepreg**
Dünnes Prepreg mit einseitig gerichteten Glasfasern
Prepreg mince avec fibres de verre unidirectionelles

(30) Priority: 24.11.1989 JP 306211/89
(43) Date of publication of application: 29.05.1991
(73) Proprietor: Tonen Corporation, Tokyo (JP)
(72) Inventor: Takezawa, Makoto, Chiyoda-ku, Tokyo (JP); Miyao, Makiji, Chiyoda-ku, Tokyo (JP); Murakami, Shinkichi, Chiyoda-ku, Tokyo (JP); Atsumi, Akihiro, Chiyoda-ku, Tokyo (JP)
(74) Representative: Harvey, David Gareth

(56) References cited:
- PATENT ABSTRACTS OF JAPAN,vol.9, no.128(M-384)(1851) 4 June 1985 & JP-A-60 011 315 (MITSUBISHI RAYON K.K.) 21 January 1985
- CAOUTCHOUCS & PLASTIQUES vol.62, no.654, October 1985, PARIS, FRANCE pages 57 - 59; 'STRUCTIL: les demi-produits composites'
- COMPOSITES, vol 14, no. 2. April 1983, GUILDFORD, SURREY, GB pages 87-91; M.MOLYNEUX: 'Prepreg, tape and fabric technology for advanced composites'
- COMPOSITES vol.25, no.3, May 1985, PARIS, FRANCE pages 69 -77; P.LISSAC 'Nappe ou tissu? Comment choisir lors de la fabrication d'une pièce composite'?*see the paragraph "Nappes préimprégnées", pages 69-70 and figure 1*
- PATENT ABSTRACTS OF JAPAN vol.12, no.296 (M-731)(3143) 12 August 1988 & JP-A-63 074 606 (NIPPON STEEL CORP.) 5 April 1988

## Description

The present invention relates to a unidirectional thin glass prepreg in which glass fibers as reinforcing fiber are arranged in one direction in a thin layer.

Unidirectional thin glass prepregs comprising a thin layer of glass fibers as reinforcing fiber unidirectionally arranged and impregnated with a matrix resin such as an epoxy resin are known.

Such unidirectional thin glass prepregs have transparency and, when attached to some object for reinforcing purposes, allow its surface to be seen through the attached transparent prepreg, so that the prepreg may ornament the appearance of an object reinforced by the prepreg attached thereon. The prepregs, therefore, may be preferably used as the material to reinforce the surfaces of fishing rods, golf clubs, and the like.

Such type of unidirectional thin glass prepregs can be obtained by spreading glass rovings each of which is converged of a number of monofilaments of glass fiber, while arranging the monofilaments in one direction in a thin layer either on a sheet of resin coated paper comprising a release paper and a matrix resin which is coated on the inside of the release paper or between two sheets of resin coated paper, and applying heat and pressure to them from outside of the paper so that the resin can permeate between the monofilaments and can simultaneously become B-staged.

Prior unidirectional thin glass prepregs, however, have drawbacks of inhomogeneity, significant unevenness in weight distribution, poor physical properties such as strength, and additionally the presence of voids therein make them whitish and not sufficiently clear. Further, they do not have a smooth surface in ordinary cases, but have a finely wavy surface in extreme cases. Consequently, when prepregs are laid on and applied to the surface of an object which is to be strengthened by them, air bubbles may be entrained either between superposed prepregs or between the prepreg and the object to be strengthened. Such air bubbles would hinder the prepregs from fully exhibiting their capability of reinforcing the object.

In view of the foregoing, it is strongly desired to develop an improved unidirectional thin glass prepreg which is homogeneous, has excellent physical properties such as strength, is well transparent, and has a smooth surface, whereby it can be laid on and applied to an object to be strengthened without the entraining of air bubbles and thus can fully exhibit the intended reinforcing property.

Japanese Patent Application No. 58-118812 discloses prepregs made from rovings with a matrix resin. The rovings are made from converged fibres of monfilaments which are doubled. The monofilaments have a diameter of less than 6µm. Unfortunately, no prepregs having such properties have been proposed hitherto.

An object of the present invention is therefore to provide a unidirectional thin glass prepreg having the above properties.

The above object is achieved by the unidirectional thin glass prepreg according to the present invention. Briefly, the present invention resides in a unidirectional thin glass prepreg comprising glass fiber monofilaments which are formed by spreading glass rovings without being doubled and which are unidirectionally arranged in a thin layer, and a matrix resin, wherein each of said monofilaments has a diameter of 10 to 20 µm and wherein said prepreg has a thickness of 50 to 150 µm. Preferably, said matrix resin is an epoxy type resin and each of said glass rovings has converged monofilaments of less than 2000.

The invention will now be explained in more detail in the description which follows, which is given by way of example of the invention.

The inventors have made energetic efforts to develop a unidirectional thin glass prepreg which is homogeneous, has excellent physical properties such as strength, has good transparency, and has a smooth surface, whereby it can be laid on and applied to an object to be strengthened without the entraining of air bubbles and thus can fully exhibit the intended reinforcing property. As a result, the following has been revealed.

An ordinary glass roving is manufactured by converging several hundreds of monofilaments of glass fiber into a single thread, and again converging several or several tens of such monofilament threads into a single fiber strand, i.e. a glass roving. Since ordinary glass rovings are thus subjected to two converging operations in the course of which monofilaments are formed into a single fiber strand, they are not converged in the fiber strand in an orderly manner; that is, monofilaments are twisted, distorted, and wound around one another. Consequently, when the glass rovings are spread and the spread glass fiber monofilaments of the rovings are unidirectionally arranged in a thin layer on a resin coated paper sheet, or between two resin coated paper sheets, the arranged monofilaments are twisted, distorted or wound around one another, so that it is impossible for a resin to fully permeate between the monofilaments. Therefore, the conventional prepreg is such that the monofilaments are not arranged in an orderly manner and the resin is not homogeneously permeated. In addition, the prepreg may include voids present between the monofilaments resulting in the prepreg being whitish and unclear, and further it will not have a smooth, but rather a finely wavy surface.

In contrast, in a roving without being doubled formed by a single operation of converging monofilaments of glass fiber into a strand or roving, the monofilaments are generally arranged in an orderly manner in the strand and only few monofilaments are twisted, distorted or mutually wound around. Consequently, when the glass rovings without being doubled are spread and the glass fiber monofilaments formed by the spreading are unidirectionally arranged in a thin layer on a resin coated paper sheet, or between two resin coated paper sheets, the arranged monofilaments are orderly and are not twisted, distorted or wound around one another, so that it is possible for a resin to fully permeate between the monofilaments when the prepreg is impregnated with the resin. Therefore, the prepreg using the spreaded glass rovings without being doubled is such that the monofilaments are arranged in an orderly manner and the resin is homogeneously permeated, so that it can have excellent physical properties such as strength. In addition, the prepreg does not include voids between the monofilaments, so that it is clear and not whitish, and further the prepreg will have a highly smooth surface.

The present invention has been made based on the above findings.

In accordance with the present invention, glass fiber roving without being doubled may be used as the reinforcing fiber of the unidirectional thin glass prepreg, the roving consisting of glass fiber monofilaments each having a diameter of 10 to 20 µm. Monofilaments having a diameter less than 10 µm are not sufficiently tough to strengthen to a sufficient degree a prepreg which includes these monofilaments as reinforcement. However, if the monofilament diameter is greater than about 20 µm, it is so thick that a matrix resin cannot sufficiently adhere to it. Therefore, the monofilaments of the roving without being doubled should have diameter of 10 to 20 µm, preferably 13 to 15 µm.

The number of monofilaments converged to form a roving without being doubled is not particularly limited in the invention. However, the number should be about 2,000 at most, since, in a thin prepreg of the invention, gaps are more likely to occur between monofilaments as the number of converged monofilaments increases. When the number of converged monofilaments in one roving is less, there occur no particular problems except that a larger number of rovings without being doubled must be used. A particularly preferred number of converged monofilaments is about l,600.

A sizing agent used for the convergence of monofilaments of a roving without being doubled should be one of the same family as the matrix resin used in the prepreg so that the monofilaments can have a good conformability with the matrix. The amount of the sizing agent adhering to the roving without being doubled is dependent on the type or kind of the agent but, in general, should preferably be small from the view point of spreadability. If, however, the adhering amount of the sizing agent is too small, the roving becomes hard to handle. The adhering amount of the sizing agent should therefore be determined in consideration of the handling ability. When an epoxy type sizing agent, for example, is used, it should preferably be 0.l to l.0% by weight, and more preferably 0.2 to 0.6% by weight.

The matrix resin used in the unidirectional thin glass prepreg is required to be excellent in strength and clarity, and may be a thermosetting matrix resin, such as epoxy resin, unsaturated polyester resin, polyurethane resin, diallyl phthalate resin, or phenol resin. A curing agent and other suitable additives, such as a flexibility-imparting agent, may be added so that the matrix resin can have a curing temperature of 50 to 150°C.

For example, epoxy resins may preferably be used as the matrix resin. Available epoxy resins include, for example, (l) glycidilether type epoxy resins (bisphenol A, F, or S type epoxy resins, novolak type epoxy resins, brominated bisphenol A type epoxy resins); (2) cyclic aliphatic epoxy resins; (3) glycidylester type epoxy resins; (4) glycidylamine type epoxy resins; (5) heterocyclic epoxy resins; and other various types of epoxy resins. One or more resins selected from these may be used. Specifically, bisphenol A, F or S glycidylamine type epoxy resins may preferably be used. As the curing agent, diaminophenylsulfone (DDS), or diaminodiphenylmethane (DDM), for example, may preferably be used.

The matrix resin should have a viscosity which has a low value when it is applied to paper for preparing resin coated paper, and which has a value of about l,000 to about 20,000 cP(mPa.s) during the coating process. More preferably, it should be 1,500 to 3,000 cP(mPa.s) This is because, on the one hand, the matrix resin will flow, allowing the arranged monofilaments to flow and become out of order during the manufacture of a prepreg, if the matrix resin viscosity is too low, and, on the other hand, the resin will not sufficiently permeate between the monofilaments, causing nonuniformity of impregnation, if the viscosity is too high.

In accordance with the present invention, the unidirectional thin glass prepreg may have a net thickness, not including the thickness of the release paper, of 50 to 150 µm. If the prepreg is too thin, i.e. its thickness is less than about 50 µm, then it cannot sufficiently reinforce an intended object to be strengthened by it. If the prepreg has a thickness larger than 150 µm, then it is too thick and is unsuitable for some kinds of use such as ornamental uses on objects, for example fishing rods or golf club shafts.

The unidirectional thin glass prepreg of the present invention may be continuously manufactured by spreading a glass roving without being doubled, while arranging the spread glass fiber monofilaments in one direction in a thin layer between the insides of two sheets of resin coated paper, the inside of which is coated with a matrix resin, and applying heat and pressure to them from the outsides of the two sheets of resin coated paper so that the resin can permeate between the monofilaments and can simultaneously become B-staged. Alternatively, it may be manufactured by a batch process, in which the roving without being doubled is spread while the spread monofilaments of the roving are arranged in one direction in a thin layer and simultaneously wound around a resin coated paper sheet which is wound on a drum, and thereafter the resin-coated paper sheet is removed from the drum and is subjected to the above-described heat and pressure process.

The invention will further be described, by way of example.

### Example

In accordance with the present invention, glass fibers in the form of a roving without being doubled was used as reinforcing fiber to produce unidirectional thin glass prepregs (Invention Nos. l-4). For comparison purposes, other unidirectional thin glass prepregs (Comparison Nos. l-4) were also produced under conditions at least part of which was out of the range prescribed by the present invention. All of these prepregs were produced in accordance with the above-mentioned continuous process.

Table l shows data of the invention prepreg Nos. l - 4 and comparison prepreg Nos. l - 4, representing: matrix resin used; amount of applied matrix resin per unit area of the resin coated paper (two, upper and lower, resin coated paper sheets were used); the number of rovings without being doubled used per width of 300 mm of prepreg; heating temperature during impregnating with the resin the monofilaments of rovings without being doubled; and the type (trade name) of used rovings without being doubled.

Table 2 shows data representing the prepreg producing conditions of: whether the used roving is a roving without being doubled or an ordinary roving; the number of converged monofilaments of the roving; monofilament diameter (fiber diameter); TEX; the amount of applied sizing agent; the type of the sizing agent, i.e. whether it is an epoxy agent or a thermoplastic agent; the resin viscosity during coating; and the amount (Vf) of monofilaments contained in the prepreg, together with properties of the obtained prepreg of: thickness; resin impregnation ununiformity; fluctuation of monofilaments (fluctuation of threads); gap between monofilaments; and surface smoothness.

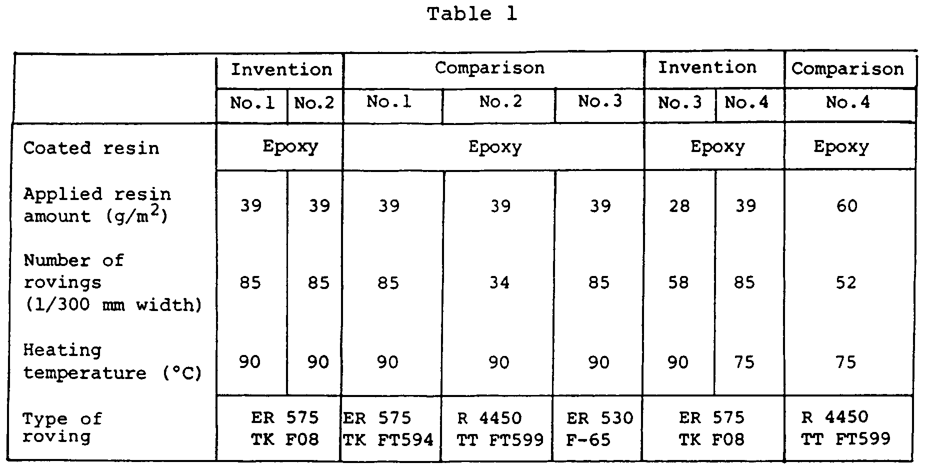

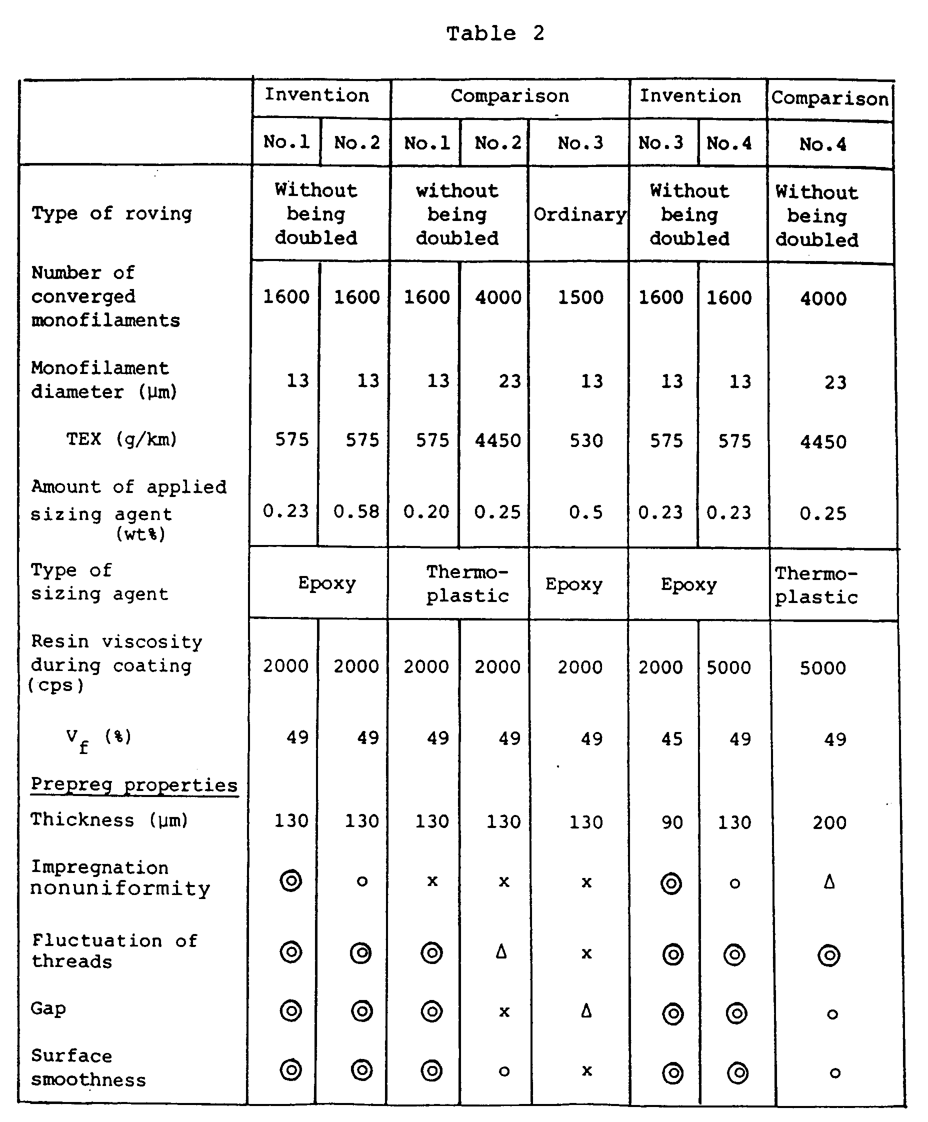

In Table 2, "fluctuation of threads" indicates the degree of unidirectionality of the arranged monofilaments. "Impregnation nonuniformity" designates a situation where voids are present, making the prepreg whitish and locally unclear, because of insufficient permeation of the resin between the monofilaments. If the resin used is colored, then the prepreg would also be nonuniformly colored.

In Table 2, the symbol "ⓞ" represents a prepreg having very good properties, while "o" represents a prepreg having good properties. Prepregs given either of these symbols are within the range of acceptance. The symbol "△" represents a prepreg having poor properties and "x" represents a prepreg having significantly poor properties, and prepregs with these symbols are out of the range of acceptance.

The used rovings without being doubled were from Asahi Fiber Glass Inc., and the used ordinary rovings were from Nippon Denki Glass Inc.

As will be clear from Table 2, the invention prepreg Nos. l - 4 are excellent in all of the listed properties. More specifically, very good results have been obtained in all the properties except the resin impregnation nonuniformity of prepreg Nos. 2 and 4, No. 2 prepreg having a large amount, 0.58% by weight, of an applied sizing agent, and No. 4 prepreg having a large coated resin viscosity of 5,000 cP(mPa.s)

In contrast, comparison prepreg No. l is very poor in the property of resin impregnation nonuniformity due to the use of a thermosetting sizing agent, and comparison prepreg Nos. 2 and 4 are poor in the property of resin impregnation nonuniformity due to the use of rovings without being doubled comprising a thick monofilaments having a large diameter of 23 µm. Further, due to the use of an ordinary glass roving, comparison prepreg No. 3 is very poor in the properties of resin impregnation nonuniformity, fluctuation of threads, and surface smoothness, and it is poor in the property of gap.

As will be clear from the foregoing, the unidirectional thin glass prepreg according to the present invention comprises glass fiber monofilaments which are formed by spreading glass rovings without being doubled and which are unidirectionally arranged in one direction in a thin layer, and a matrix resin, wherein the monofilaments have a diameter of 10 to 20 µm, and the prepreg has a thickness of 50 to 150 µm.

Consequently, when the glass rovings without being doubled are spread and the spread glass monofilaments of the rovings are unidirectionally arranged in a thin layer on a resin coated paper sheet, or between two resin coated paper sheets, the arranged monofilaments are orderly and are not twisted, distorted or wound around one another. Therefore, it is possible for a resin to fully permeate between the monofilaments when the prepreg is impregnated with the resin.

The unidirectional thin glass prepreg of the invention provides the advantages that the monofilaments are arranged in an orderly manner and the resin is homogeneously permeated, so that it can have excellent physical properties such as strength. In addition, the present prepreg does not include voids between the monofilaments, so that it is well clear and not whitish. Further, the prepreg would have a highly smooth surface.

## Claims

1. A unidirectional thin glass prepreg comprising a matrix resin and a thin layer of glass rovings, each glass roving comprising unidirectionally arranged glass monofilaments and the prepreg having a thickness of 50 to 150 µm, characterised in that each of said monofilaments has a diameter of 10 to 20 µm and the glass rovings are formed of monofilaments which are not doubled.

2. A unidirectional thin glass prepreg according to claim l, wherein said matrix resin is an epoxy type resin.

3. A unidirectional thin glass prepreg according to claim l or 2, wherein each of said glass rovings has converged monofilaments of less than 2000.

4. A method of making a glass prepreg comprising the steps of;
(a) forming a roving by a single operation of converging monofilaments of glass fiber into a strand or roving, the monofilaments of which are arranged in an orderly manner without being twisted or doubled;
(b) disposing such rovings unidirectionally on a thin resin-coated base sheet, or sandwiching them unidirectionally between two such base sheets; and
(c) causing the resin coating fully and homogeneously to permeate the monofilaments of the rovings; the roving being produced from monofilaments having diameters in the range of 10 to 20 µm and the prepreg having a thickness in the range of 50 to 150 µm.

## Patentansprüche

1. Dünnes Prepreg mit einseitig gerichteten Glasfasern, das ein Matrixharz und eine dünne Schicht aus Glas-Rovings umfaßt, wobei jedes Glas-Roving in einer Richtung angeordnete monofile Glasfäden umfaßt und das Prepreg eine Dicke von 50 bis 150 µm aufweist, dadurch gekennzeichnet, daß jeder der monofilen Fäden einen Durchmesser von 10 bis 20 µm hat und die Glas-Rovings aus monofilen Fäden gebildet sind, die nicht gedoppelt sind.

2. Dünnes Prepreg mit einseitig gerichteten Glasfasern nach Anspruch 1, bei dem das Matrixharz ein Harz vom Epoxy-Typ ist.

3. Dünnes Prepreg mit einseitig gerichteten Glasfasern nach Anspruch 1 oder 2, bei dem jedes der Glas-Rovings weniger als 2000 zusammengelegte monofile Fäden hat.

4. Ein Verfahren zum Herstellen eines Glas-Prepregs, das die Schritte umfaßt:
(a) Bilden eines Rovings durch einen einzigen Arbeitsgang des Zusammenlegens von monofilen Fäden aus Glasfaser zu einem Strang oder Roving, dessen monofile Fäden in einer geordneten Weise angeordnet sind, ohne zusammengedreht oder gedoppelt zu sein;
(b) Anordnen derartiger Rovings in einer Richtung ausgerichtet auf ein dünnes harzbeschichtetes Grundblatt oder sandwichartiges Legen derartiger Rovings einseitig ausgerichtet zwischen zwei derartige Grundblätter; und
(c) Bewirken, daß die Harzbeschichtung vollständig und homogen die monofilen Fäden der Rovings durchdringt, wobei ein Roving aus monofilen Fäden mit Durchmessern im Bereich von 10 bis 20 µm hergestellt ist und das Prepreg eine Dicke im Bereich von 50 bis 150 µm aufweist.

## Revendications

1. Préimprégné mince à fibres de verre unidirectionnelles comportant une résine de matrice et une mince couche de stratifils de verre, chaque stratifil de verre comprenant des monofilaments de verre disposés de façon unidirectionnelle, ce préimprégné ayant une épaisseur de 50 à 150 µm, caractérisé en ce que chacun desdits monofilaments a un diamètre de 10 à 20 µm et les stratifils de verre sont formés de monofilaments non doublés.

2. Préimprégné mince à fibres de verre unidirectionnelles selon la revendication 1, dans lequel ladite résine de matrice est une résine de type époxy.

3. Préimprégné mince à fibres de verre unidirectionnelles selon la revendication 1 ou 2, dans lequel lesdits stratifils de verre comprennent moins de 2000 monofilaments convergés.

4. Procédé de fabrication d'un préimprégné de fibre de verre comprenant les étapes consistant à:
(a) former un stratifil en une seule opération de convergence de monofilaments de fibre de verre en un brin ou stratifil, dont les monofilaments sont disposés de façon ordonnée sans être tordus ou doublés;
(b) disposer ces stratifils suivant une seule direction sur une mince feuille de base enduite de résine, ou placer les stratifils suivant une seule direction en sandwich entre deux de ces feuilles de base; et
(c) amener la résine d'enduction à imprégner complètement et de façon homogène les monofilaments des stratifils; le stratifil étant produit à partir de monofilaments ayant des diamètres dans la gamme de 10 à 20 µm et le préimprégné ayant une épaisseur dans la gamme de 50 à 150 µm.
